# EUROPÄISCHE PATENTSCHRIFT

(11) **EP 2 701 951 B1**
(45) Veröffentlichungstag und Bekanntmachung des Hinweises auf die Patenterteilung: **23.11.2016**
(21) Anmeldenummer: 11773718.9
(22) Anmeldetag: 19.10.2011
(51) Int. Cl.: B60R 1/078, B60R 1/06, B60R 1/066, B60R 1/072

(54) **LÄNGENVERSTELLBARE AUSSENSPIEGELVERSTELLUNG**
LENGTH-ADJUSTABLE EXTERIOR MIRROR ADJUSTMENT MEANS
RÉGLAGE DU RÉTROVISEUR EXTÉRIEUR À RÉGLAGE EN LONGUEUR

(30) Priorität: 27.04.2011 DE 102011002295
(43) Veröffentlichungstag der Anmeldung: 05.03.2014
(73) Patentinhaber: MEKRA Lang GmbH & Co. KG, 91465 Ergersheim (DE)
(72) Erfinder: LANG, Werner, 91465 Ergersheim (DE); FINKENBERGER, Elmar, 91587 Adelshofen (DE)
(74) Vertreter: Winter, Brandl, Fürniss, Hübner, Röss, Kaiser, Polte - Partnerschaft mbB
(86) Internationale Anmeldenummer: PCT/EP2011/068280
(87) Internationale Veröffentlichungsnummer: WO 2012/146322

(56) Entgegenhaltungen:
- DE-A1- 3 938 961
- DE-T2- 60 304 385
- GB-A- 868 642

## Beschreibung

Die vorliegende Erfindung betrifft eine Außenspiegelanordnung für Kraftfahrzeuge, insbesondere Nutzfahrzeuge, gemäß dem Oberbegriff des Anspruchs 1.

In manchen Fällen kann es notwendig sein, nicht nur den Winkel bzw. die Ausrichtung eines Fahrzeugaußenspiegels, sondern auch dessen Entfernung von der Fahrzeugkarosserie einzustellen. Eine solche Längeneinstellung kann z. B. bei einem Fahrzeug mit einem überbreiten Anhänger notwendig sein, um dem Fahrer eine ausreichende Sicht nach hinten zu bieten. Wenn kein überbreiter Anhänger gezogen werden soll, kann über die Längeneinstellung der weit nach außen ragende Fahrzeugaußenspiegel näher an die Karosserie gebracht werden, was nicht nur aerodynamische Vorteile hat, sondern auch das Risiko einer Beschädigung des Außenspiegels beim Rangieren oder Durchfahren von engen Durchfahrten mindert.

Aus der DE 39 38 961 A1 ist eine teleskopierbare Verstellung für einen Außenspiegel bekannt. Dabei ist der Außenspiegel an einem stufenlos einstellbaren Teleskoprohr befestigt, das seinerseits über zwei Flachprofile eines Halterahmens an der Fahrzeugkabine angelenkt ist. Diese offene Gestaltung der Spiegelanordnung ist nicht nur aus aerodynamischer Sicht problematisch, sondern hat auch den Nachteil, dass das Gelenk und auch das Teleskoprohr der Witterung ausgesetzt sind. Da runde Teleskoprohre nicht nur verschiebbar, sondern auch zueinander drehbar sind, muss bei einer solchen Anordnung die Längenverstellung auch Drehmomente aufnehmen können, welche über äußere Krafteinwirkung am Spiegel aufgebracht werden.

Man ist deshalb dazu übergegangen, Vierkantrohre zu verwenden, die zueinander verschiebbar, aber nicht drehbar sind. Die Fixierung einer bestimmten Relativposition der Vierkantrohre zueinander wurde beispielsweise über eine zweiseitige Klemmung erreicht. Den zuvor genannten Problemen des aerodynamischen Verhaltens und Schutz vor Witterung wurde begegnet, indem um die Teleskopanordnung ein Gehäuse aus zwei miteinander verschraubten Druckgusshalbschalen montiert wurde.

In der Praxis hat sich jedoch gezeigt, dass diese Lösung nicht nur schwer, sondern auch nicht in allen Fällen den Festigkeitsanforderungen für die Krafteinleitung vom Außenspiegel in die fahrzeugseitige Halterung bzw. den Fahrzeugrahmen gerecht wird.

Auch aus der DE 603 04 385 T2 ist ein Außenrückspiegel gemäß dem Oberbegriff des Anspruchs 1 bekannt.

Die GB 868 642 A beschreibt eine längenverstellbare Außenspiegelanordnung mit einer fahrzeugseitigen Halterung, einem daran befestigten, vorzugsweise rastbar angelenkten rohrförmigen Metallgehäuse und einem in dem Gehäuse verschiebbar aufgenommenen rohrförmigen Haltebügel für einen Fahrzeugaußenspiegel. Die Führung des Haltebügels gegenüber dem Metallgehäuse erfolgt durch einen Gleitlagerabschnitt, welcher in dem Gehäuse an dessen der fahrzeugseitigen Halterung abgewandten Ende angeordnet ist. Durch die Ausgestaltung des Gehäuses als Metallrohr hat dieses zwar die erforderliche Festigkeit bzw. Steifigkeit, ist jedoch - insbesondere bei weiterer Ausladung - in nachteiliger Weise schwer und damit u.a. vibrationsanfällig.

Vor diesem Hintergrund besteht die Aufgabe der vorliegenden Erfindung darin, eine Außenspiegelanordnung für Kraftfahrzeuge zu schaffen, welche eine Längenverstellung des Fahrzeugaußenspiegels bzw. des Haltebügels, an welchem der Fahrzeugaußenspiegel montiert wird, zur fahrzeugseitigen Halterung zulässt, einfach gestaltet bzw. herstellbar ist, eine Gewichtsreduzierung der Anordnung insgesamt erreicht und den Festigkeitsanforderungen genügt.

Diese Aufgabe wird durch die Merkmale des Anspruchs 1 gelöst.

Demnach weist eine Außenspiegelanordnung gemäß der vorliegenden Erfindung eine fahrzeugseitige Halterung, ein daran befestigtes, vorzugsweise rastbar angelenktes, Gehäuse und einen in dem Gehäuse verschiebbar aufgenommenen Haltebügel für einen Fahrzeugaußenspiegel auf. Hierbei weist das Gehäuse einen einstückig ausgebildeten und den Haltebügel allein führenden ersten Gehäuseabschnitt aus Kunststoff auf und ein fahrzeugseitiger Befestigungsabschnitt des ersten Gehäuseabschnitts weist zur Befestigung an der Halterung einen in dem ersten Gehäuseabschnitt eingegossenen Metalleinleger auf.

Durch die erfindungsgemäße Außenspiegelanordnung kann zum einen das Gewicht der Anordnung insgesamt reduziert werden und zum anderen erfüllt sie die geforderten Festigkeitsanforderungen. Da der den Haltebügel führende Gehäuseabschnitt aus Kunststoff ist, ergibt sich daraus eine wesentliche Gewichtsreduzierung der Spiegelanordnung insgesamt. Ferner hat sich gezeigt, dass ein einstückig ausgebildetes Kunststoffgehäuse wesentlich steifer als z.B. miteinander verschraubte Gehäusehälften aus Druckguss ist. Ferner ergeben sich bei einem Kunststoffgehäuse große Freiheitsgrade im Hinblick auf dessen Gestaltung, so dass sich das erfindungsgemäße Gehäuse nicht nur kostengünstig fertigen, sondern auch je nach Anwendungsfall flexibel gestalten lässt. Über den eingegossenen Metalleinleger wird eine lokale Verstärkung des Kunststoffgehäuses im Bereich des Befestigungsabschnitts erreicht, wodurch eine sichere Krafteinleitung vom Gehäuse in die fahrzeugseitige Halterung sichergestellt werden kann, ohne dabei das Gewicht des Gehäuses insgesamt wesentlich zu erhöhen.

Durch den in den fahrzeugseitigen Befestigungsabschnitt des Gehäuses integrierten, eingegossenen Metalleinleger kann die Handhabbarkeit verbessert werden. Über die Dimensionierung des Metalleinlegers können die Eigenschaften des Gehäuses verändert werden und den jeweiligen Anforderungen maßgeschneidert angepasst werden. Erfindungsgemäß kann somit die Kraft vom Gehäuse auf sichere Weise in die fahrzeugseitige Halterung eingeleitet werden.

Vorzugsweise kann der erste Gehäuseabschnitt, der den Haltebügel trägt und führt, einen Gleitlagerabschnitt aufweisen, in welchem der Haltebügel unmittelbar am Gehäuseabschnitt oder an darin eingebrachten Gleitleisten linear geführt ist. Durch diese Anordnung übernimmt sozusagen das Gehäuse die Funktion des aus dem Stand der Technik bekannten äußeren Teleskoprohrs, wodurch die Anzahl der Einzelteile der Außenspiegelanordnung und somit die Komplexität der Spiegelanordnung reduziert werden kann. Um die Gleitwirkung des in dem Gehäuse verschiebbar aufgenommenen Haltebügels zu erhöhen, können entsprechende Gleitleisten aus einem Material mit geringem Haftreibwert zwischengeschaltet werden.

Um den Haltebügel bzw. den Außenspiegel an einer bestimmten Position festzuhalten bzw. zu fixieren, kann am Gleitlagerabschnitt eine Klemmeinrichtung vorgesehen sein, welche über einen Kraft- bzw. Reibfluss eine Relativbewegung von Haltebügel und Gehäuse unterbindet. Als Klemmeinrichtung kann ein am Kunststoffgehäuseabschnitt schwenkbar angeordneter Spannhebel dienen, der eine Nocke aufweist, mit welcher ein am Gleitlagerabschnitt vorgesehenes Klemmstück, vorzugsweise über eine Blattfederanordnung, gegen eine Außenwandung des Haltebügels gespannt werden kann.

Durch die Integration der Klemmeinrichtung, d.h. des Spannhebels, des Klemmstücks und ggf. der Blattfederanordnung, in den Gehäuseabschnitt lässt sich der Haltebügel ohne weitere Werkzeuge verstellen und fixieren. Somit dient der Gleitlagerabschnitt nicht nur zur Linearführung des Haltebügels, sondern zugleich auch als eine Art Halteabschnitt zum Fixieren des Haltebügels in einer bestimmten Position. Dabei drückt der Spannhebel auf ein Klemmstück, so dass nicht nur zwischen dem Klemmstück und der Außenwandung des Haltebügels ein Reibschluss entsteht, sondern auch zwischen der Außenwandung des Haltebügels und dem gegenüberliegenden Gehäuse- bzw. Gleitleistenabschnitt.

Bei Zwischenschaltung einer Blattfeder dient diese beim Betätigen des Spannhebels nicht nur zum Toleranzausgleich, sondern sie definiert auch eine gleichmäßige Vorspannkraft, so dass nicht nur eine einfache Handhabung beim Klemmen und Lösen des Spannhebels, sondern auch eine definierte Klemmkraft erzielt wird. Dies hat einen Vorteil gegenüber bislang verwendeten punktuellen Klemmschrauben, deren Klemmwirkung vom jeweiligen Drehmoment abhing und mitunter der Haltebügel nicht fest und sicher fixiert wurde.

Vorzugsweise ist der Spannhebel am Gehäuseabschnitt so angeordnet, dass er im geklemmten Zustand vollständig in einer Ausnehmung des Gehäuses aufgenommen ist. Dadurch wird der Spannhebel nicht nur vor äußeren Krafteinwirkungen geschützt, sondern lässt sich aerodynamisch im Gehäuse komplett verstauen.

Durch die permanente Spannung oder Klemmung können Vibrationen zwischen Haltebügel und Gehäuse minimiert werden. Zum Beispiel bleibt der Spannhebel stets geschlossen.

Alternativ kann anstelle einer Klemmeinrichtung eine Fixiereinrichtung vorgesehen sein, welche einen Formschluss zwischen dem Gehäuse und dem Haltebügel erreicht, z. B. über abschnittsweise vorgesehene Rastelemente.

Neben dem Gleitlagerabschnitt kann der erste Gehäuseabschnitt ferner einen Führungsabschnitt mit einer oder mehreren Führungsrippen aufweisen, die in entsprechende Nuten eines Gleitstücks eingreifen, das am Haltebügel vorgesehen ist. Dabei erstrecken sich die Nuten und die Führungsrippen in Verschiebungsrichtung des Haltebügels. Das Zusammenwirken der Führungsrippen, die innen am hohlen Kunststoffgehäuse ausgebildet sind, und der Nuten des Gleitstücks wird die Linearführung des im Gehäuse verschiebbar aufgenommenen Haltebügels weiter verbessert. Neben der Linearführung stellen die in die Nuten des mit dem Haltebügel fest verbundenen Gleitstücks eingreifende Führungsrippen sicher, dass der Haltebügel bzw. der Fahrzeugaußenspiegel zu dem Gehäuse nicht verdreht werden kann. Durch das Zusammenwirken von Gleitstück und Führungsrippen wird eine definierte Geometrie zur Aufnahme von Biege- und Torsionsmomenten geschaffen. Durch das Zusammenwirken von dem Gleitstück und den Führungsrippen wird der Haltebügel im Inneren des Gehäuses geführt und zentriert.

Das Gehäuse kann ferner einen zweiten Gehäuseabschnitt aufweisen, über welchen die fahrzeugseitige Halterung mit dem ersten Gehäuseabschnitt verbunden werden kann. Somit kann der erste Gehäuseabschnitt entsprechend seiner Hauptfunktion, nämlich der alleinigen Aufnahme und Führung des Haltebügels und der Verstellmimik ausgelegt werden, und die Fixierung an der fahrzeugseitigen Halterung über einen speziell dafür vorgesehenen zweiten Gehäuseabschnitt, vorzugsweise ebenfalls einstückig aus Kunststoff, erfolgen. Dadurch kann beispielsweise erreicht werden, dass ein baugleicher erster Gehäuseabschnitt an unterschiedlichen fahrzeugseitigen Halterungen befestigt werden kann, indem lediglich ein entsprechend anders gestalteter zweiter Gehäuseabschnitt verwendet wird.

Der zweite Gehäuseabschnitt hat vorzugsweise zur Befestigung an der Halterung einen fahrzeugseitigen Befestigungsabschnitt mit einer weiteren Metallplatte, die als lokale Verstärkung zur Befestigung des Gehäuseabschnitts an der Halterung dient, ohne dabei das Gewicht des Gehäuses insgesamt wesentlich zu erhöhen. Um die Handhabbarkeit zu verbessern, kann die Metallplatte in Form eines in den Gehäuseabschnitt eingegossenen Metalleinlegers in den fahrzeugseitigen Befestigungsabschnitt des Gehäuses integriert werden. Über die Dimensionierung der Metallplatte bzw. des Metalleinlegers können die Eigenschaften des Gehäuses verändert werden und den jeweiligen Anforderungen maßgeschneidert angepasst werden. Erfindungsgemäß kann somit die Kraft vom Gehäuse auf sichere Weise in die fahrzeugseitige Halterung eingeleitet werden.

Das Gehäuse kann über ein Rastgelenk an einer fahrzeugseitigen Halterung befestigt sein. Dadurch lässt sich das Gehäuse samt Haltebügel und dem daran befestigten Fahrzeugaußenspiegel einklappen, z. B. bei engen Durchfahrten oder bei äußerer Krafteinwirkung, um so eine Beschädigung des Spiegels zu vermeiden.

Vorteilhafterweise kann die Halterung hierfür eine angeformte Rastzähnegeometrie aufweisen, die mit einem zwischen dem Befestigungsabschnitt des ersten oder zweiten Gehäuseabschnitts und der Halterung angeordneten Rastelement in Wirkverbindung steht. Wenn an der Halterung eine Rastzähnegeometrie ausgebildet ist, weist das Rastgelenk nicht nur weniger Bauteile auf, sondern kann auch vor Umwelteinflüssen gekapselt werden, so dass das Rastgelenk weniger korrosions- und verschleißanfällig ist.

Das zwischengeschaltete Rastelement ist vorzugsweise über eine Nutfederverbindung mit dem Befestigungsabschnitt des ersten bzw. zweiten Gehäuseabschnitts formschlüssig verbunden und somit drehfest daran fixiert.

Um eine definierte Schwenkbewegung des Gehäuses an der fahrzeugseitigen Halterung zu ermöglichen, weist der Befestigungsabschnitt des ersten oder zweiten Gehäuseabschnitts eine daran ausgebildete Gleitlagerbuchse auf, welche in einer entsprechenden Aufnahme der Halterung schwenkbar aufgenommen ist. Da der Gehäuseabschnitt aus Kunststoff ausgebildet ist, lässt sich diese Gleitlagerbuchse auch entsprechend einfach herstellen. Ferner lassen dadurch auch weiter die Anzahl der Bauteile reduzieren.

Erfindungsgemäß kann der im Gehäuse aufgenommene Haltebügel durch Ziehen oder Schieben manuell betätigt und verstellt und somit der Abstand des Außenspiegels bezüglich der Karosserie verändert werden. Alternativ kann jedoch die Außenspiegelanordnung zur Verstellung des Haltebügels eine elektrische Stelleinheit aufweisen, die z. B. von innerhalb der Kabine ansteuerbar ist, was für die Bedienperson komfortabler ist. Die Verstellung des Haltebügels über die elektrische Stelleinheit kann auf verschiedene Weise erfolgen. Zum Beispiel kann die Stelleinheit eine Spindel antreiben, welche mit einem in das Gleitstück eingeformten Trapezgewinde in Eingriff steht. Wenn der Haltebügel als Rohr ausgebildet ist, kann die Spindel im Inneren des Haltebügels Platz finden, wodurch eine besonders kompakte Bauweise erreicht wird. Alternativ kann der Haltebügel über mit dem Gleitstück gekoppelte Seilzüge oder über einen Zahnstangenantrieb auf einfache Weise verstellt werden.

Im Übrigen dient das Gleitstück als eine Art Adapter, so dass zur Verwendung in der erfindungsgemäßen Spiegelanordnung ein gewöhnlicher und üblicherweise verwendeter Rohrbügel als Haltebügel verwendet und ggf. mit einem erfindungsgemäßen Gleitstück nachgerüstet bzw. abgewandelt werden kann.

Vorzugsweise kann die elektrische Stelleinheit in dem als Hohlkörper ausgebildeten ersten Gehäuseabschnitt angeordnet sein und ein fahrzeugseitiger Außenumfangsabschnitt der elektrischen Stelleinheit zu einer umlaufenden Innenwandung des ersten Gehäuseabschnitts komplementär ausgebildet sein. Somit kann die elektrische Stelleinheit den ersten Gehäuseabschnitt fahrzeugseitig abschließen und abdichten, so dass sich die gesamte Verstellmimik und die elektrische Stelleinheit abgedichtet im Gehäuseabschnitt befinden. Vorzugsweise kann ein Getriebedeckel der elektrischen Stelleinheit bzw. des Elektromotors diese Verschluss- bzw. Abdichtfunktion übernehmen. Dadurch ergibt sich nicht nur ein einfacher Aufbau, sondern auch eine Integration zweier Funktionen in einem Bauteil.

Gemäß einem anderen oder weiteren Aspekt der Erfindung kann die elektrische Stelleinheit den Haltebügel selbst dann verstellen, wenn der Haltebügel am Gleitlagerabschnitt über die Klemmeinrichtung festgeklemmt ist. Durch die permanente Spannung können Vibrationen zwischen Haltebügel und Gehäuse minimiert werden. Zum Beispiel bleibt der Spannhebel stets geschlossen.

Gemäß einem anderen oder weiteren Aspekt der Erfindung ist zwischen der elektrische Stelleinheit und der Spindel eine Kupplungseinrichtung geschaltet, die eine Übertragung eines für die Verstellung des Haltebügels notwendigen Drehmoments von der elektrischen Stelleinheit auf die Spindel in beide Richtungen erlaubt und bei einem Überlastmoment größer als einem vorbestimmten Grenzdrehmoment selbststätig eine Relativdrehung zwischen der elektrischen Stelleinheit und der Spindel erlaubt. Die Kupplung ist ferner so konfiguriert, dass bei einem Drehmomentrichtungswechsel über einen vorbestimmten Freigangswinkel kein Verstelldrehmomnet übertragen wird. Dadurch wird zum einen ein Überlastschutz gewährleistet und zum anderen bei einem Drehrichtungswechsel ein lastfreies Anlaufen der elektrischen Stelleinheit auf eine bestimmte Nenndrehzahl ermöglicht. Beides wirkt sich positiv auf den Betrieb und die Lebensdauer der elektrischen Stelleinheit aus.

Die Kupplungseinrichtung kann eine von der elektrischen Stelleinheit angetriebene Kupplungsglocke und einen mit der Spindel drehfest verbundenen Mitnehmer aufweisen. Dabei kann der Mitnehmer über den Umfang gleichmäßig verteilte, radial nach außen federbelastete und gegen eine Innenwandung der Kupplungsglocke gespannte Wälzkörper oder Gleitkörper aufweisen und die Innenwandung der Kupplungsglocke über den Umfang gleichmäßig verteilte Erhebungen aufweisen, welche die Wälzkörper oder Gleitkörper bei einem Überlastmoment größer als dem vorbestimmten Grenzdrehmoment radial nach innen verdrängen.

Durch das lastfreie Anlaufen wird ein Teil der Bewegungsenergie der Kupplungsglocke und des Trägheitsmoment der elektrischen Stelleinheit in Form eines Stoßes an die Walzen und damit an den Mitnehmer weitergegeben, bevor sich der Formschluss zwischen den Walzen und den Vorsprüngen, d.h. zwischen der Kupplungsglocke und dem Mitnehmer einstellt und das zu übertragenden Moment übertragen wird. Dieser in der normalen Getriebetechnik unerwünschte Effekt ist bei der erfindungsgemäßen Außenspiegelanordnung beabsichtigt, um ein zeitweises Verklemmen des Haltebügels und des Gehäuses, z.B. aufgrund von Verschmutzung, zu lösen.

Die Anzahl der Erhöhungen kann höher als die der Wälzkörper oder Gleitkörper sein. Dadurch können die Rastwinkel und somit das Spiel zwischen Kupplungsglocke und Mitnehmer bzw. zwischen elektrischer Stelleinheit und Spindel gering gehalten werden.

Die vorliegende Erfindung wird anhand der beigefügten Zeichnung näher dargestellt. In den einzelnen Figuren der Zeichnung ist:
Fig. 1 eine Querschnittsansicht einer Außenspiegelanordnung gemäß einer ersten Ausführungsform der Erfindung;
Fig. 2 eine Querschnittsansicht entlang der Linie II-II in der Fig. 1;
Fig. 3 eine Querschnittsansicht entlang der Linie III-III in der Fig. 1;
Fig. 4 eine Frontansicht eines Gleitstücks der Außenspiegelanordnung gemäß der ersten Ausführungsform der Erfindung;
Fig. 5 eine Seitenansicht des Gleitstücks;
Fig. 6 eine Querschnittsansicht des Gleitstücks;
Fig. 7 einen Endabschnitt eines Haltebügels der Außenspiegelanordnung gemäß der ersten Ausführungsform der Erfindung;
Fig. 8 eine Stirnansicht des Endabschnitts des Haltebügels;
Fig. 9 eine Querschnittsansicht einer zwischen einer elektrischen Stelleinheit und Spindel geschalteten Kupplungseinrichtung der Außenspiegelanordnung gemäß der ersten Ausführungsform;
Fig. 10 ein Drehmoment-Zeit-Diagramm beim Verstellen des Haltebügels der Außenspiegelanordnung gemäß der ersten Ausführungsform der Erfindung;
Fig. 11 ein weiteres Drehmoment-Zeit-Diagramm beim Verstellen des Haltebügels der Außenspiegelanordnung gemäß der ersten Ausführungsform der Erfindung;
Fig. 12 eine Querschnittsansicht einer Außenspiegelanordnung gemäß einer zweiten Ausführungsform der Erfindung; und
Fig. 13 eine Querschnittsansicht entlang der Linie XIII-XIII in der Fig. 12.

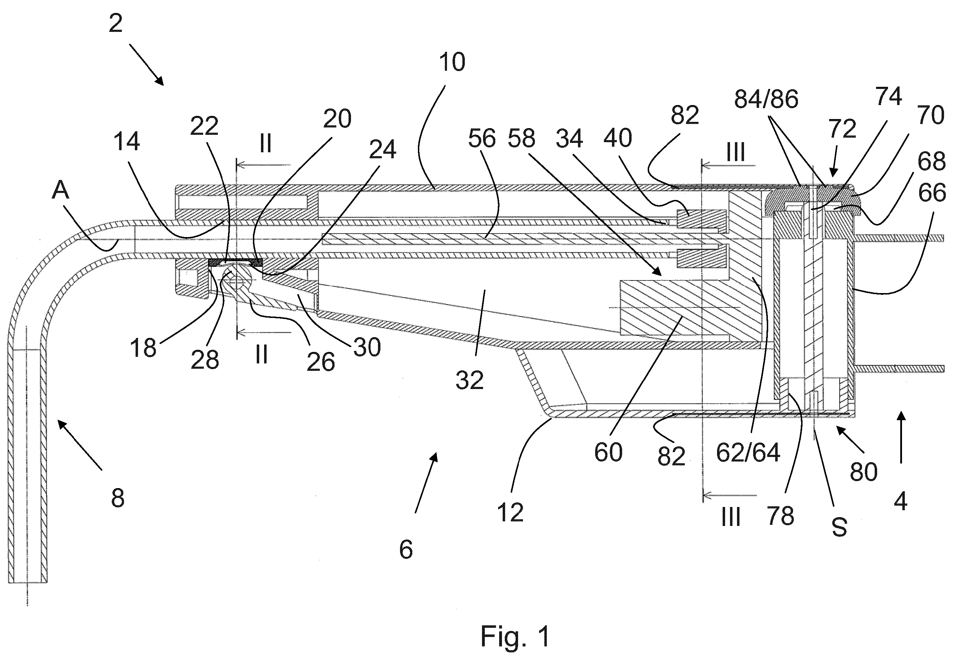

Die Fig. 1 zeigt eine Querschnittsansicht einer erfindungsgemäßen Außenspiegelanordnung 2 gemäß einer ersten Ausführungsform mit einer fahrzeugseitigen Halterung 4, einem Gehäuse 6 und einem Haltebügel 8. Der Haltebügel 8 dient zur Befestigung eines nicht gezeigten Fahrzeugaußenspiegels.

Das Gehäuse 6 besteht aus einem ersten Gehäuseabschnitt 10 und einem zweiten Gehäuseabschnitt 12, wobei der erste Gehäuseabschnitt 10 alleine den Haltebügel 8 trägt und führt und der zweite Gehäuseabschnitt 12 im Wesentlichen nur zur Befestigung des Gehäuses 2 an der Halterung 4 dient. Der erste Gehäuseabschnitt 10 ist bevorzugt ein einstückiger tragenden Hohlkörper aus Kunststoff, so dass darin neben dem verschiebbar aufgenommen Haltebügel 8 auch noch eine manuelle oder motorisch oder anderweitig betriebene Einstellmimik untergebracht werden kann.

Der erste Gehäuseabschnitt 10 weist auf seiner von der Halterung 4 abgewandten Seite einen Gleitabschnitt 14 auf, in welchem der Haltebügel 8 verschiebbar aufgenommen ist. Der Gleitabschnitt 14 wird im Wesentlichen durch eine zylindrische Ausnehmung im ersten Gehäuseabschnitt 10 gebildet, welche mit (nicht gezeigten) Gleitleisten aus POM versehen ist.

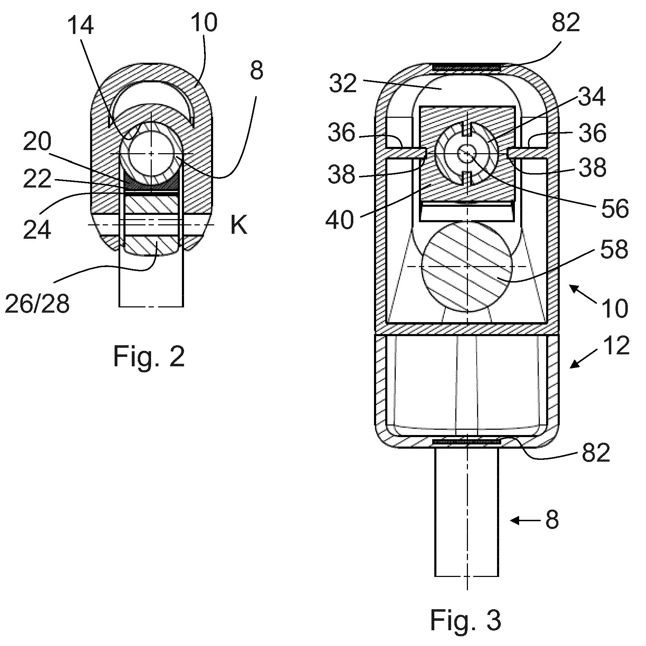

Der Gleitabschnitt 14 weist eine radiale Öffnung 18 auf, in der ein Klemmstück 20 radial verschiebbar aufgenommen ist. Das Klemmstück 20 ist komplementär zu dem Haltebügel 8, d.h. zylindrisch konkav, ausgebildet (siehe Fig. 2). Das Klemmstück 20 hat auf seiner dem Haltebügel 8 abgewandten Seite eine Ausnehmung 22, die von einer Blattfeder 24 überspannt wird.

Im Gleitabschnitt 14 ist ferner ein manuell betätigbarer Spannhebel 26 drehbar angeordnet, wobei die Schwenkachse K eine zur Mittelachse A des Haltebügels 8 radial beabstandete Querachse ist, die sich radial außerhalb des Klemmstücks 20 befindet. Der Spannhebel 26 weist eine Nocke 28 auf, welche beim Schwenken des Spannhebels 26 um die Schwenkachse K auf die Blattfeder 24 drückt und diese elastisch in Richtung des Haltebügels 8 verformt. Über die Federkraft der Blattfeder 24 wird das Klemmstück 22 radial nach innen gedrückt und bildet mit einem Abschnitt der Außenwandung des Haltebügels 8 einen Kraft- bzw. Reibschluss und drückt ferner den Haltebügel 8 reibschlüssig an die gegenüberliegende Seite der zylindrischen Ausnehmung des Gleitabschnitts 14.

Die Fig. 2 zeigt eine Querschnittsansicht entlang der Linie II-II in der Fig. 1, welche parallel zur Schwenkachse K und senkrecht zur Mittelachse A verläuft.

Der Gleitabschnitt 14 weist ferner eine Ausnehmung 30 auf, in welcher der Spannhebel 26, wenn sich dieser im gespannten Zustand befindet (wie in der Fig. 1 gezeigt), komplett im Gleitabschnitt 14 bzw. dem ersten Gehäuseabschnitt 10 aufgenommen ist und darin verschwindet. Die Ausnehmung 30 ist ferner so bemessen, dass man mit der Hand oder einem Werkzeug den Spannhebel 26 zum Betätigen greifen kann.

Der erste Gehäuseabschnitt 10 weist ferner einen dünnwandigen Hohlkörperabschnitt 32 auf, der Halterungsseitig an den Gleitabschnitt 14 angrenzt und einen Endabschnitt 34 des Haltebügels 8 umgibt. Wie aus der Fig. 3 ersichtlich ist, welche eine Schnittansicht entlang der Linie III-III in der Fig. 1 darstellt, weist der Hohlkörper 32 zwei nach innen vorstehende, einander gegenüberliegende und parallel zur Mittelachse A sich erstreckende Führungsrippen 36 auf, welche gleitend in entsprechende Längsnuten 38 eines am Endabschnitt 34 des Haltebügels 8 befestigten Gleitstücks 40 eingreifen. Dadurch, dass das Gleitstück 40 drehfest am Haltebügel 8 befestigt ist, stellt das Zusammenwirken von Führungsrippen 36 und Nuten 38 sicher, dass der Haltebügel 8 zwar entlang der Mittelachse A verschiebbar, jedoch nicht um diese drehbar ist. Etwaige äußere Krafteinwirkungen auf den Fahrzeugaußenspiegel bzw. den Haltebügel 8 werden von den Führungsrippen 36 aufgenommen. Die axiale Erstreckung der Führungsrippen 36 entspricht dabei zumindest dem maximalen Verschiebeweg des Haltebügels 8 in dem Gehäuse 6.

Der Hohlkörperabschnitt 32 in Verbindung mit den Führungsrippen 36 bildet einen Führungsabschnitt im Sinne der Erfindung. Somit wird der Haltebügel 8 zum einen am Gleitabschnitt 14 als auch an den Führungsrippen 36 geführt. Ferner nehmen der Gleitabschnitt 14 und die Führungsrippen 36 die Biegemomente auf. Aufgrund des langen Hebelarms zwischen Gleitabschnitt 14 und der Stelle, an welcher das Gleitstück 40 in den Führungsrippen 36 geführt ist, können die Biegekräfte gering gehalten werden.

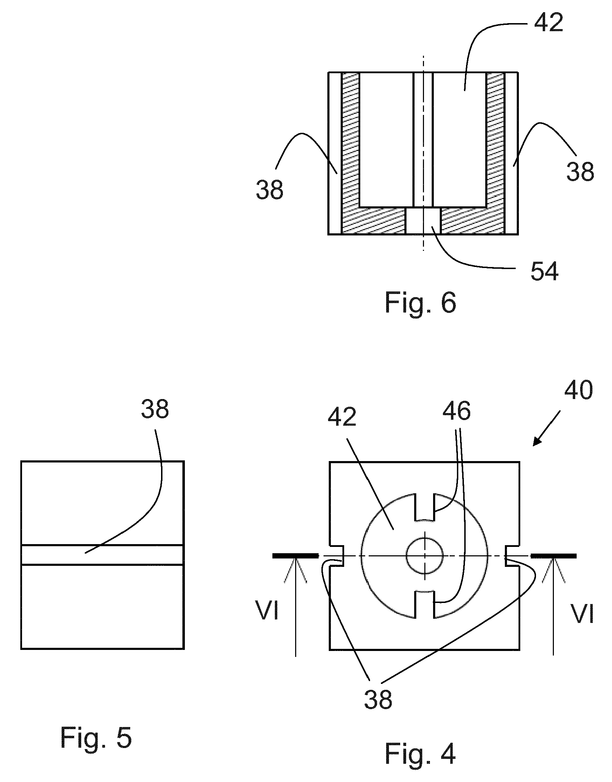

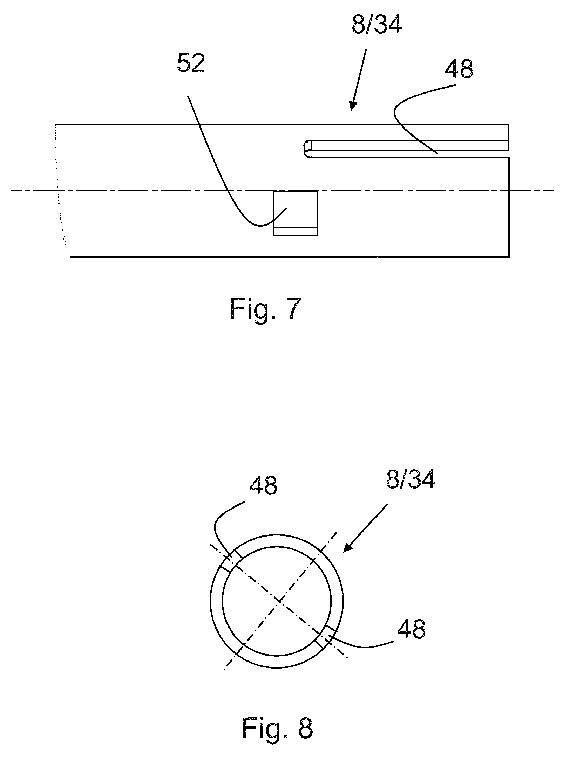

Die Fign. 4, 5 und 6 zeigen verschiedene Ansichten des Gleitstücks 40. Dabei ist die Fig. 4 eine Stirnansicht, die Fig. 5 eine Seitenansicht und die Fig. 6 eine Querschnittsansicht entlang der Linie VI-VI in der Fig. 4. Das Gleitstück 40 ist im Wesentlichen ein würfelförmiger Körper, der an zwei gegenüberliegenden Seiten die Längsnuten 38 und an einer dritten Seite eine zylindrische Ausnehmung 42 mit zwei nach innen vorstehenden, einander gegenüberliegenden und in axialer Richtung erstreckenden Vorsprüngen 46, aufweist. Die Vorsprünge 46 greifen in Längsschlitze 48 ein, die am Endabschnitt 34 des Haltebügels 8 vorgesehen sind (siehe Fign. 7 und 8), wenn das Gleitstück 40 auf den Endabschnitt 34 des Haltebügels 8 aufgebracht wird. Das so gestaltete Gleitstück 40 hat eine hohe Festigkeit und kann über den Haltebügel 8 aufgebrachte Biege- und Torsionsmomente auf den ersten Gehäuseabschnitt 10 übertragen. Ferner handelt es sich bei dem Gleitstück 40 um ein integriertes Bauteil mit maßgeschneiderten Eigenschaften, welches darüber hinaus auch noch kostengünstig herstellbar ist.

Der Außendurchmesser des Endabschnitts 34 und der Innendurchmesser der Ausnehmung 42 sind als Presspassung toleriert. Ferner weist das Gleitstück 40 (nicht dargestellte) Schnapphaken auf, welche in einen entsprechenden Rücksprung bzw. in eine entsprechende Ausnehmung 52 (siehe Fig. 7) formelastisch und formschlüssig eingreifen. Dadurch befindet sich das Gleitstück 40 drehfest auf dem Haltebügel 8 und ist zudem axial fixiert.

Am Boden der Ausnehmung 42 ist eine zentrale Gewindebohrung 54 mit einem Trapezgewinde ausgebildet, welches mit einer Spindel 56 in Wirkverbindung steht, die über eine elektrische Stelleinheit 58, bestehend aus einem Elektromotor 60 und einem Getriebe 62 angetrieben wird. Die elektrische Stelleinheit 58 sowie die Spindel sind in der Fig. 1 lediglich schematisch dargestellt. Es ist jedoch zu beachten, dass ein halterungsseitiger Abschnitt der elektrischen Stelleinheit 58, z. B. ein Getriebedeckel 64, komplementär zum Innenumfang des ersten Gehäuseabschnitts 10 ausgebildet ist und somit die gänzlich im ersten Gehäuseabschnitt 10 befindliche Verstellmimik nach außen verschließen, vorzugsweise abdichten kann.

Wenn die Spindel 56 in die eine oder andere Richtung angetrieben wird, wird das mit der Spindel 56 in Eingriff befindliche Gleitstück 40 entlang der Achse der Spindel 56, welche mit der Mittelachse A des Endabschnitts 34 des Haltebügels 8 zusammenfällt und gleichzeitig die Verschiebeachse des Haltebügels 8 darstellt, bewegt und der mit dem Gleitstück 40 fest verbundene Haltebügel 8 axial verschoben. Dabei gleiten die Führungsrippen 36 des ersten Gehäuseabschnitts 10 in den Längsnuten 38 des Gleitstücks 40 und die Außenwandung des Haltebügels 8 an den Gleitleisten im Gleitabschnitt 14. Um Vibrationen zwischen Haltebügel 8 und Gehäuse 6 zu minimieren, bleibt hierbei der Spannhebel 26 geschlossen. Das Klemmstück 20 drückt also permanent auf den Haltebügel und hält die Spannung aufrecht. Der Elektromotor 60 muss daher beim Verfahren des Haltebügels 8 grundsätzlich die Reibungskraft zwischen Gleitlagerabschnitt 14 und Haltebügel 8 überwinden. Die zu überwindende Reibungskraft wird jedoch durch die Gleitleisten reduziert. Wenn sich der Fahrzeugaußenspiegel bzw. der Haltebügel 8 an der gewünschten Position befindet, kann die elektrische Stelleinheit 58 gestoppt werden und die Position wird über den Spannhebel 26 und das Klemmstück 20 mechanisch fixiert. Dadurch kann die elektrische Stelleinheit 58 entlastet und abgeschaltet werden.

Wenn keine Gleitleisten vorgesehen sind, kann alternativ vor dem Verfahren des Haltebügels 8 der Spannhebel 26 gelöst und nach dem Verfahren dieser gespannt werden.

Wie aus der Fig. 1 ferner ersichtlich ist, dient der erste Gehäuseabschnitt 10 zur teilweisen Aufnahme der fahrzeugseitigen Halterung 4. Dabei weist die Halterung 4 einen senkrecht zur Mittelachse A verlaufenden Hohlzylinderabschnitt 66, an welchem das Gehäuse 6 um eine Schwenkachse S schwenkbar befestigt ist, auf. Der zylindrische Abschnitt 66 der Halterung 4 weist an einem Ende eine angeformte Rastzähnegeometrie 68 auf und kann unter Zwischenschaltung eines Rastelements 70 mit einem Befestigungsabschnitt 72 des ersten Gehäuseabschnitts 10 über eine Schraubenverbindung 74 befestigt werden.

Auf der gegenüberliegenden Seite wird die Halterung 4 über den zweiten Gehäuseabschnitt 12 mit dem Gehäuse 6 verbunden. Dazu weist der zylindrische Abschnitt 66 der Halterung 4 eine Ausnehmung 76 auf, die zur Aufnahme einer zylinderförmigen Gleitlagerbuchse 78, die innen an einem Befestigungsabschnitt 80 ausgebildet ist, wenn der zweite Gehäuseabschnitt 12 mit dem ersten Gehäuseabschnitt 10 verbunden wird.

Wie den Fign. 1 und 3 ferner zu entnehmen ist, sind in den dünnwandigen Befestigungsabschnitten 72, 80 des ersten bzw. zweiten Gehäuseabschnitts 10, 12 Metalleinleger 82 in das Kunststoffgehäuse eingegossen, die zur Verstärkung der Befestigungsabschnitte 72, 80 und zur Krafteinleitung vom Gehäuse 6 in die Halterung 4 dienen.

Wie der Fig. 1 ferner zu entnehmen ist, weist der Befestigungsabschnitt 72 des ersten Gehäuseabschnitts 10 Nuten 84 auf, in welche am Rastelement 70 außenseitig angeformte Vorsprünge 86 formschlüssig eingreifen. Die Halterung 4 wird über das Rastelement 70 mit in den ersten Gehäuseabschnitt 10 eingegossene Metalleinleger 82 verschraubt. Dadurch ist das Rastelement 70 drehfest am ersten Gehäuseabschnitt 10. befestigt. Dieser Formschluss lässt sich alternativ auch durch eine Nut-Feder-Verbindung bewerkstelligen.

Der zylindrische Gelenkabschnitt 66 der Halterung 4 ist mittels einer (nicht gezeigten) Feder gegen das Rastelement 70 vorgespannt und der zylindrische Gelenkabschnitt 66 ist so zwischen dem ersten und dem zweiten Gehäuseabschnitt 10, 12 eingefasst, dass sich bei einem entsprechend aufgebrachten Schwenkmoment vorbestimmter Größe das Rastelement 70 gegen die Federvorspannung bezüglich der Rastzähnegeometrie 68 der Halterung 4 verdreht und so eine Schwenkbewegung zwischen dem Gehäuse 6 und der Halterung 4 zulässt.

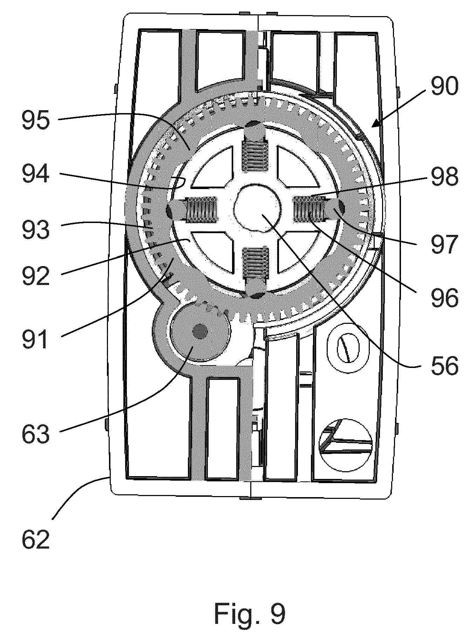

Fig. 9 zeigt eine Querschnittsansicht einer zwischen dem Getriebe 62 und der Spindel 56 geschalteten Kupplung 90. Die Kupplung 90 überträt ein Drehmoment von einer Getriebestufe 63 des Getriebes 62 über eine Kupplungsglocke 91 auf einen Mitnehmer 92 und schließlich auf die mit dem Mitnehmer 92 drehfest verbundenen Spindel 56. Die Getriebestufe 63 kämmt mit einer Außenverzahnung 93 der Kupplungsglocke 91. Am Innenumfang 94 der zylindrisch oder ringförmig ausgebildeten Kupplungsglocke 91 sind über den Umfang gleichmäßig verteilte Vorsprünge bzw. Nocken 95 ausgebildet, welche mit über Druckfedern 96 radial nach außen vorgespannte Walzen 97 des Mitnehmers 92 zusammenwirken. Dieses Zusammenwirken und die Funktion der Kupplung 90 werden im Folgenden detailliert beschrieben.

Der Mitnehmer 92 weist radial verlaufende, nach außen mündende und über den Umfang gleichmäßig verteilte Ausnehmungen 98 (in der Fig. 9: vier Ausnehmungen) auf, in denen die Druckfedern 96 untergebracht sind. Diese Druckfedern 96 spannen die Walzen 97, die an ihren Enden angeordnet sind, radial nach außen gegen den Innenumfang 94 der Kupplungsglocke 91. Dabei befinden sich die Walzen 97 zum größten Teil in den Ausnehmungen 98. Wenn die Kupplungsglocke 91 über die Getriebestufe 63 angetrieben wird, rollen die Walzen 97 in Umfangsrichtung am Innenumfang 94 zwischen den Vorsprüngen 95 der Kupplungsglocke 91 solange ab, bis sie an einem der Vorsprünge 95 auflaufen. Die Vorsprünge 95 versuchen, die Walzen 97 gegen die Federkraft der Druckfedern nach innen zu verdrängen. Die Federkräfte sind so gewählt, dass sie die bei einem normalen Antrieb der Spindel 56 und Verfahren des Haltbügels nicht nach innen ausweichen, so dass die Walzen des Mitnehmers 92 und die Vorsprünge 95 der Kupplungsglocke 91 eine Art Formschluss bilden und somit Drehmomente von der Kupplungsglocke 91 auf den Mitnehmer 92 und somit auf die Spindel 56 übertragen.

Bei einem Richtungswechsel der Kupplungsglocke 91 bleibt der Mitnehmer 92 solange stehen, bis die Walzen 97 am in Drehrichtung nächsten Vorsprung 95 auflaufen und mit diesen den oben erwähnten Formschluss eingehen.

Um einen Überlastschutz zu gewährleisten, lassen sich die Walzen 97 bei einer vorbestimmten Drehmomentgrenze MK von den Vorsprüngen 95 gegen die Druckfedern 96 soweit radial nach innen gedrückt, dass sie nach dem Prinzip einer Durchrastkupplung die Vorsprünge 95 überwinden und eine größere Relativdrehung zwischen Kupplungsglocke 91 und Mitnehmer 92 zulassen. Dadurch wird eine Schädigung der elektrischen Stelleinheit 38 unterbunden.

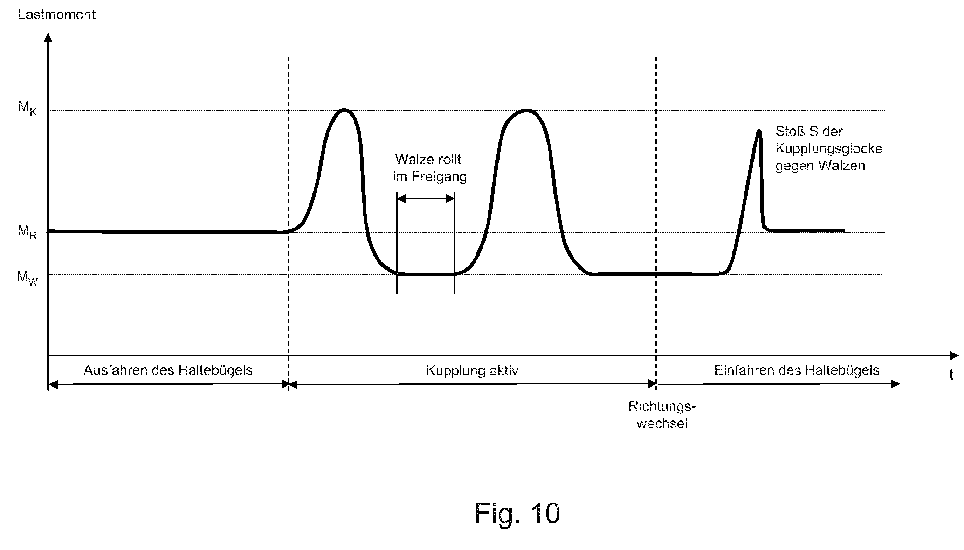

Die Fig. 10 zeigt ein Zeit-Drehmoment-Diagramm. Bei Ausfahren des Haltebügels 8 liegen die Walzen 97 an den Vorsprüngen 95 der Kupplungsglocke 91 an und übertragen so eine bestimmtes Drehmoment, das zumindest das Reibmoment MR zwischen dem Haltebügel 8 und dem Klemmstück 20 in dem Gleitabschnitt 14 erreichen soll.

Wenn der Haltbügel 8 z. B. aufgrund eines Anschlags seine maximal ausgefahrene Position erreicht hat, lässt sich der Haltebügel 8 und somit die Spindel 56 bzw. der Mitnehmer 92 nicht mehr weiter drehen. Wenn die Kupplungsglocke 91 weiter angetrieben wird, erreicht die Kupplungsglocke 91 relativ schnell das Kupplungsmoment MK, d.h. das über die Kupplung 90 maximal übertragbare Moment MK, welches durch das Zusammenspiel der Vorsprünge 95 und der Druckfeder 96 bestimmt wird. Wird das Kupplungsmoment MK erreicht, weichen die Walzen 97 radial nach innen aus, so dass die Vorsprünge 95 passieren können. In der Folge wälzen die Walzen 97 am Innenumfangsabschnitt 94 zwischen den Vorsprüngen 95 ab, d.h. die Walzen 97 rollen im Freigang. Das Rollreibmoment MW zwischen Walzen 97 und Kupplungsglocke 91 liegt unterhalb des Reibungsmoments MR, d.h. des normalerweise zu übertragenden Moments. Nach einem vorbestimmten Drehwinkel f laufen die Walzen 97 wieder an den entsprechenden Vorsprüngen 95 auf und passieren diese bei Überschreiten des Kupplungsmoments MK.

Wenn die Drehungsrichtung der Kupplungsglocke 91 wechselt, rollen die Walzen 97 in die entgegengesetzte Richtung bis zum nächsten Vorsprung. D.h. bei einem Richtungswechsel ist also möglich, die Bogenlänge des Freigangs (ϕ) lastfrei zu überwinden, bis die gegenüberliegenden Flanken der Vorsprünge 95 mit den Walzen 97 in Kontakt treten. Dabei wird ein Teil der Bewegungsenergie der Kupplungsglocke 91 und der Trägheitsmasse des Motors in Form eines Stoßes S an die Walzen 97 und damit an den Mitnehmer 92 weitergegeben, bevor sich der Formschluss zwischen den Walzen 97 und den Vorsprüngen 95, d.h. zwischen der Kupplungsglocke 91 und dem Mitnehmer 92 einstellt und das zu übertragenden Moment MR übertragen wird.

Dieser in der normalen Getriebetechnik unerwünschte Effekt ist bei der erfindungsgemäßen Außenspiegelanordnung beabsichtigt. Wird nämlich die Ausfahrbewegung des Haltebügels (Phase I in Fig. 10) solange fortgesetzt, bis der Kupplungsbetrieb einsetzt (Phase II in Fig. 10), ist ein leichtes Verspannen des Gleitstücks 40 mit der Spindel 56 nicht auszuschließen. Durch den Stoß bzw. Impulseintrag beim Richtungswechsel kann dieses Verspannen bzw. Verklemmen gelöst werden. Darüber hinaus kann der Haltebügel 8 aufgrund von Verschmutzungen im Gehäuse 6 verklemmen. Wenn diese Verklemmung nicht mit dem ersten Stoß gelöst wird und das Kupplungsmoment MK überschritten wird, überrastet die Kupplung 90. Der dadurch entstehende periodische Impulseintrag auf den Mitnehmer 92 und damit auf die Spindel 56 führt zum allmählichen Lösen der Schmutzpartikel. Somit lassen sich Schmutzpartikel, die ein Verklemmen zwischen Haltebügel 8 und Gehäuse 6 zur Folge haben, effektiv lösen.

Der Freigang hat noch den weiteren Vorteil, dass der Elektromotor 60 nahezu lastfrei bis zu einer Drehzahl kleiner gleich der Nenndrehzahl anlaufen kann. Bei einem Abschalten des Vorschubs wird sich die Ruhelage der Spindel 56 und damit des Mitnehmers 92 dergestalt einstellen, das die Walzen 97 bezogen auf die im Vorschubsfall vorliegende Drehrichtung direkt vor den Flanken der wellenartigen Erhöhungen in der Kupplungsglocke 91 zum Liegen kommen. Bei einem Richtungswechsel wird es also möglich sein, die Bogenlänge des Freigangs (ϕ) lastfrei zu überwinden, bis die den Flanken gegenüberliegenden Flanken mit den Walzen 97 in Kontakt treten.

Die Kupplung 90 weist somit ein großes Spiel (ϕ) zwischen Mitnehmer 92 und Kupplungsglocke 91 auf. Dies jedoch im Kontext der erfindungsgemäßen Außenspiegelanordnung 2 unproblematisch, da die kinematische Wirkkette zwischen Motor 60 und Haltebügel 8 durch die Klemmung entkoppelt ist. Das Spiel in der Kupplung 90 wirkt sich also nicht als Spiel zwischen Haltebügel 8 und Gehäuse 6 aus.

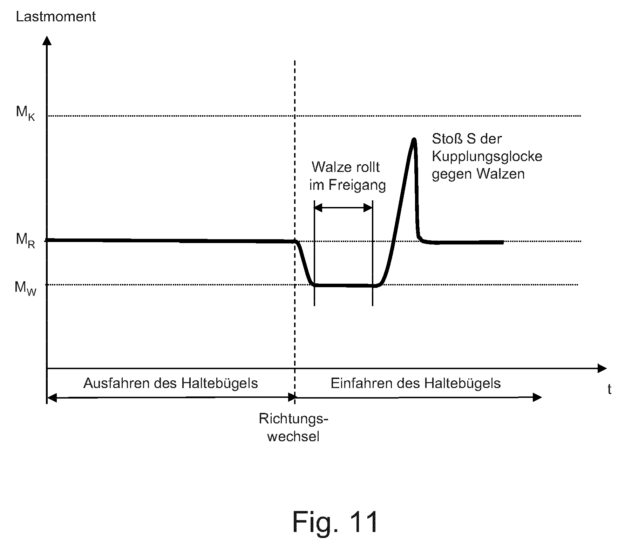

Fig. 11 zeigt ein weiteres Drehmoment-Zeit-Diagramm beim Verstellen des Haltebügels 8. Es zeigt den bei einem gewöhnlichen Drehrichtungswechsel ohne einem bei Überlast auftretenden Lastmoment. Da die Vorsprünge 95 am Innenumfang 94 der Kupplungsglocke 91 von einander beabstandet sind, dauert es ein gewisse Zeit, bis die Walzen 97 in die entgegengesetzte Richtung auf die Vorsprünge 95 am Innenumfang 94 der Kupplungsglocke 91 treffen. Das übertragbare Drehmoment fällt auf das Reibungsmoment MW ab, das entsteht, wenn die Walzen 97 auf der Innenumfangsfläche 94 der Kupplungsglocke 91 abrollen. Wenn die Walzen 97 - bis dahin lastfrei - auf die Flanken der nächsten Vorsprünge 95 treffen, wirkt wieder ein trägheitsbedingtes Stoßmoment auf die Walzen 95, das jedoch schnell auf das normale Betriebsmoment abklingt.

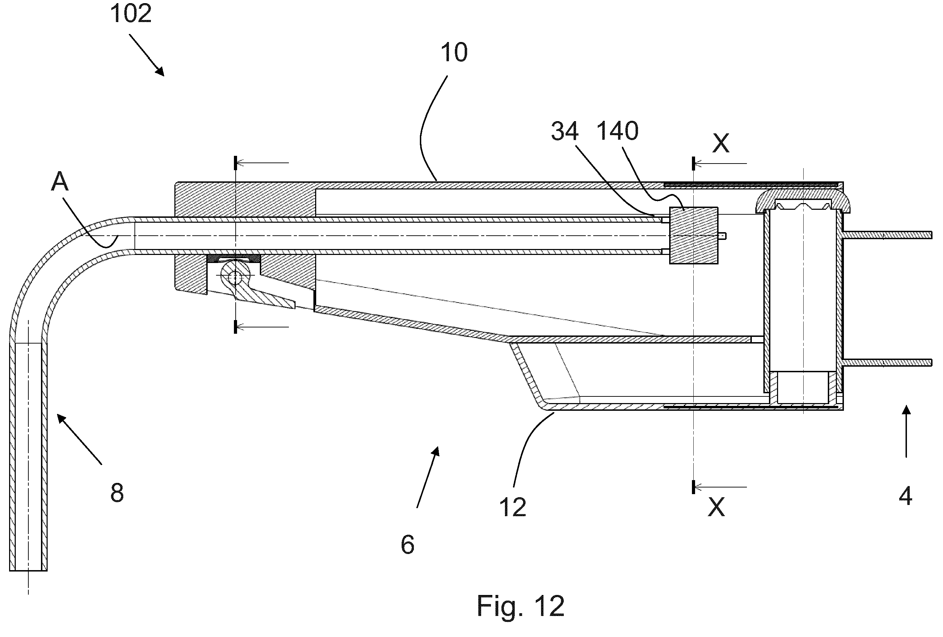

Die Fig. 12 zeigt eine Außenspiegelanordnung 102 gemäß einer zweiten Ausführungsform der Erfindung. Diese unterscheidet sich von der Außenspiegelanordnung der ersten Ausführungsform im Wesentlichen darin, dass die Verstellung des Haltebügels 8 nicht über eine elektrische Stelleinheit, sondern manuell erfolgt, weshalb im Folgenden lediglich auf die Unterschiede zu der ersten Ausführungsform eingegangen wird.

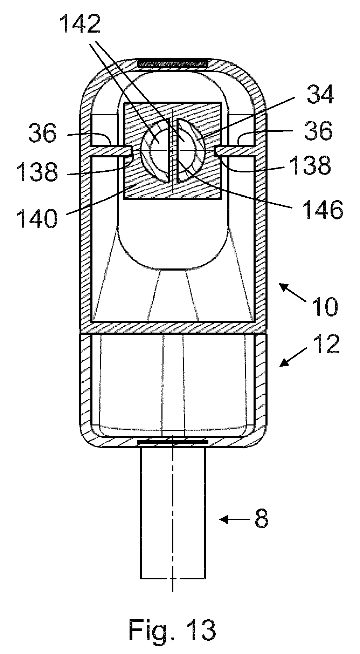

Neben der elektrischen Stelleinheit 58 kann auch die Spindel 56 entfallen. Deshalb kann, wie aus der Fig. 13 ersichtlich ist, das Gleitstück 140 anders gestaltet sein.

Bei dem Gleitstück 140 handelt es sich wie bei der ersten Ausführungsform im Wesentlichen um einen würfelförmigen Körper, der an zwei gegenüberliegenden Seiten Längsnuten 138 aufweist, welche die Führungsrippen 36 aufnehmen können. Anstelle der zylindrischen Ausnehmung 42 und der beiden nach innen vorstehenden Vorsprüngen 46 weist das Gleitstück 140 zwei halbzylindrische Ausnehmungen 142 auf, die durch eine Materialbrücke 146 getrennt sind. Dadurch lässt sich das Gleitstück 140 wie bei der ersten Ausführungsform auf einen längs geschlitzten Endabschnitt 34 des Haltebügels 8 aufschieben. Dadurch ist das Gleitstück 140 formschlüssig und drehfest am Haltebügel 8 befestigt. Die axiale Befestigung am Endabschnitt 34 des Haltebügels 8 kann wie bei der ersten Ausführungsform erfolgen.

Bei der manuellen Variante wird vor dem Verstellen des Haltebügels 8 der Spannhebel 26 gelöst und nach dem Verstellen die Position durch Schließen des Spannhebels 26 fixiert.

Auch wenn in der Fig. 12 die Befestigung an der Halterung 4 anders dargestellt ist, kann diese wie oben bei der ersten Ausführungsform (siehe Fig. 1) ausgestaltet sein. Gleiches gilt für den Gleitabschnitt.

Vorstehend wurde eine Außenspiegelanordnung für Kraftfahrzeuge gemäß zwei Ausführungsformen beschrieben, bei der ein einstückig aus Kunststoff ausgebildeter Gehäuseabschnitt den Haltebügel für einen Fahrzeugaußenspiegel allein trägt und führt. Dadurch wird eine leichte, kostengünstige und den Festigkeitsanforderungen genügende Außenspiegelanordnung geschaffen.

Da der den Haltebügel führende Gehäuseabschnitt bevorzugt aus Kunststoff ist, ergibt sich daraus eine wesentliche Gewichtsreduzierung der Spiegelanordnung insgesamt. Ferner hat sich gezeigt, dass ein einstückig ausgebildetes Kunststoffgehäuse wesentlich steifer als die oben genannten miteinander verschraubten Gehäusehälften aus Druckguss ist. Ferner ergeben sich bei einem Kunststoffgehäuse große Freiheitsgrade im Hinblick auf dessen Gestaltung, so dass sich das erfindungsgemäße Gehäuse nicht nur kostengünstig fertigen, sondern auch je nach Anwendungsfall flexibel gestalten lässt.

Selbstverständlich kann die beschriebene Außenspiegelanordnung innerhalb des Schutzbereichs der Ansprüche abgewandelt werden.

Zum Beispiel kann die Verstellung des Haltebügels über Seilzüge oder einen Zahnstangentrieb erfolgen.

Ferner können die zueinander komplementär gestalteten Elemente, wie z. B. die Verbindung zwischen dem Gleitstück und dem Endabschnitt des Haltebügels bzw. der Führungsrippen, umgekehrt gestaltet sind. Beispielsweise kann das Gleitstück längs verlaufende Vorsprünge aufweisen, die in entsprechenden Nuten im ersten Gehäuseabschnitt gleiten.

Die axiale Länge des Gehäuses kann entsprechend dem notwendigen Verschiebeweg des Haltebügels verkürzt oder verlängert werden.

Ferner können auch die Führungsrippen mit Metalleinlegern verstärkt werden. Alternativ kann das Gleitstück von allen Seiten, d.h. von vier Führungsrippen, geführt werden.

An den Führungsrippen und/oder ersten Gehäuseabschnitt können zur Begrenzung des maximalen Verschiebewegs Anschläge vorgesehen sein.

Auch kann der Metalleinleger am Befestigungsabschnitt des jeweiligen Gehäuseabschnitts je nach zu erwartenden Torsions- und Biegemomenten verlängert werden oder dicker gestaltet werden.

Ferner kann unter Umständen auf die Gleitleisten im Gleitabschnitt verzichtet werden bzw. können andere Materialien für die Gleitleisten verwendet werden.

Im Übrigen wird die erfindungsgemäße Kupplungseinrichtung als selbstständige Erfindung erachtet, deren Anwendung nicht notwendigerweise auf die beschriebene Außenspiegelanordnung beschränkt ist, sondern auf andere Außenspiegelanordnungen und Systeme außerhalb dieses technischen Gebiets übertragbar ist. Die Anmelderin behält sich deshalb das Recht vor, einen selbstständigen Schutz auf die Kupplungseinrichtung alleine zu richten.

## Patentansprüche

1. Außenspiegelanordnung (2; 102) für Kraftfahrzeuge, insbesondere Nutzfahrzeuge, mit:
einer fahrzeugseitigen Halterung (4);
einem daran befestigten, vorzugsweise rastbar angelenkten, Gehäuse (6); und
einem in dem Gehäuse (6) verschiebbar aufgenommenen Haltebügel (8) für einen Fahrzeugaußenspiegel,
**dadurch gekennzeichnet, dass**
das Gehäuse (6) einen einstückig ausgebildeten und den Haltebügel (8) allein führenden ersten Gehäuseabschnitt (10) aus Kunststoff aufweist; und
ein fahrzeugseitiger Befestigungsabschnitt (72) des ersten Gehäuseabschnitts (10) zur Befestigung an der Halterung (4) einen in dem ersten Gehäuseabschnitt (10) eingegossenen Metalleinleger (82) aufweist.

2. Außenspiegelanordnung (2; 102) nach Anspruch 1, dadurch gekenn-zeichnet, dass
der erste Gehäuseabschnitt (10) einen Gleitlagerabschnitt (14) aufweist, in welchem der, vorzugsweise rohrförmige, Haltebügel (8) unmittelbar am Gehäuseabschnitt (10) oder an darin eingebrachten Gleitleisten (16) lineargeführt ist.

3. Außenspiegelanordnung (2; 102) nach Anspruch 2, **dadurch gekennzeichnet, dass**
zum Festklemmen des Haltebügels (8) am Gleitlagerabschnitt (14) eine Klemmeinrichtung (20, 24, 26, 28), insbesondere ein über eine Nocke (28) eines an dem ersten Gehäuseabschnitt (10) schwenkbar angeordneten Spannhebels (26) gegen die Außenwandung des Haltebügels (8), vorzugsweise unter Zwischenschaltung einer Blattfederanordnung (24), spannbares Klemmstück (20), vorgesehen ist.

4. Außenspiegelanordnung (2; 102) nach Anspruch 3, **dadurch gekennzeichnet, dass** der Spannhebel (26) im geklemmten Zustand vollständig in einer Ausnehmung (30) des ersten Gehäuseabschnitts (10) aufgenommen ist.

5. Außenspiegelanordnung (2; 102) nach einem der vorangehenden Ansprüche, **dadurch gekennzeichnet, dass**
der erste Gehäuseabschnitt (10) ferner einen Führungsabschnitt (32, 36) mit einer oder mehreren Führungsrippen (36) aufweist, die in entsprechende Nuten (38; 138) eines an dem Haltebügel (8), vorzugsweise an dessen Endabschnitt (34), angeordneten und mit diesem fest verbundenen Gleitstücks (40; 140) eingreifen, wobei sich die Nuten (38; 138) und die Führungsrippen (36) in Verschiebungsrichtung des Haltebügels (8) erstrecken.

6. Außenspiegelanordnung (2; 102) nach einem der vorangehenden Ansprüche, **dadurch gekennzeichnet, dass**
das Gehäuse (6) einen zweiten, insbesondere einstückig aus Kunststoff ausgebildeten, Gehäuseabschnitt (12) aufweist, über welchen der erste Gehäuseabschnitt (10) mit der fahrzeugseitigen Halterung (4) verbindbar ist.

7. Außenspiegelanordnung (2; 102) nach Anspruch 6, **dadurch gekennzeichnet, dass**
ein fahrzeugseitiger Befestigungsabschnitt (80) des zweiten Gehäuseabschnitts (12) zur Befestigung an der Halterung (4) eine Metallplatte, vorzugsweise einen eingegossenen Metalleinleger (82), aufweist.

8. Außenspiegelanordnung (2; 102) nach Anspruch 6 oder 7, **dadurch gekennzeichnet, dass**
die Halterung (4) eine angeformte Rastzähnegeometrie (68) aufweist, die mit einem zwischen dem Befestigungsabschnitt (72) des ersten oder zweiten Gehäuseabschnitts (10, 12) und der Halterung (4) angeordneten Rastelement (70) in Wirkverbindung steht.

9. Außenspiegelanordnung (2; 102) nach einem der Ansprüche 6 bis 8, **dadurch gekennzeichnet, dass**
die Halterung (4) eine Aufnahme (76) für eine an dem Befestigungsabschnitt (80) des ersten oder zweiten Gehäuseabschnitts (10, 12) ausgebildete Gleitlagerbuchse (78) aufweist.

10. Außenspiegelanordnung (2) nach einem der vorangehenden Ansprüche, **dadurch gekennzeichnet, dass**
der Haltebügel (8) über eine elektrische Stelleinheit (58) verstellbar ist, insbesondere über eine von einer elektrischen Stelleinheit (58) angetriebene Spindel (56), die in ein in das Gleitstück (40) eingeformtes Trapezgewinde eingreift, oder über mit dem Gleitstück (40) gekoppelte Seilzüge oder über einen Zahnstangentrieb.

11. Außenspiegelanordnung (2) nach Anspruch 10, **dadurch gekennzeichnet, dass** die elektrische Stelleinheit (58) im ersten Gehäuseabschnitt (10) angeordnet ist und ein fahrzeugseitiger Außenumfangsabschnitt der elektrischen Stelleinheit (58), vorzugsweise ein Außenumfangsabschnitt eines Getriebedeckels (64), zu einer umlaufenden Innenwandung des ersten Gehäuseabschnitts (10) komplementär ausgebildet ist.

12. Außenspiegelanordnung (2) nach Anspruch 10 oder 11, **dadurch gekennzeichnet, dass**
die elektrische Stelleinheit (58) den Haltebügel (8) verstellen kann, selbst wenn der Haltebügel (8) am Gleitlagerabschnitt (14) über die Klemmeinrichtung (20, 24, 26, 28) festgeklemmt ist.

13. Außenspiegelanordnung (2) nach Anspruch einem der Ansprüche 10 bis 12, **dadurch gekennzeichnet, dass**
zwischen der elektrische Stelleinheit (58) und der Spindel (56) eine Kupplungseinrichtung (90) geschaltet ist, die eine Übertragung eines für die Verstellung des Haltebügels (8) notwendigen Drehmoments (M_{R}) von der elektrischen Stelleinheit (58) auf die Spindel (56) in beide Richtungen erlaubt und bei einem Überlastmoment größer als einem vorbestimmten Grenzdrehmoment (M_{K}) selbsttätig eine Relativdrehung zwischen der elektrischen Stelleinheit (58) und der Spindel (56) erlaubt, wobei die Kupplungseinrichtung (90) bei einem Drehmomentrichtungswechsel über einen vorbestimmten Freigangswinkel (ϕ) kein für die Verstellung des Haltebügels (8) notwendigen Drehmoments (M_{R}) überträgt.

14. Außenspiegelanordnung (2) nach Anspruch 13, **dadurch gekennzeichnet, dass**
die Kupplungseinrichtung (90) eine von der elektrischen Stelleinheit (58) angetriebene Kupplungsglocke (91) und einen mit der Spindel (56) drehfest verbundenen Mitnehmer (92) aufweist, wobei der Mitnehmer (92) über den Umfang gleichmäßig verteilte, radial nach außen federbelastete und gegen eine Innenwandung (94) der Kupplungsglocke (91) gespannte Wälzkörper (97) oder Gleitkörper aufweist; und
die Innenwandung (94) der Kupplungsglocke (91) über den Umfang gleichmäßig verteilte Erhebungen (95) aufweist, welche die Wälzkörper (97) oder Gleitkörper bei einem Überlastmoment größer als dem vorbestimmten Grenzdrehmoment (M_{K}) radial nach innen verdrängen.

15. Außenspiegelanordnung (2) nach Anspruch 14, **dadurch gekennzeichnet, dass**
die Anzahl der Erhöhungen (95) höher als die der Wälzkörper (97) oder Gleitkörper ist.

## Claims

1. An exterior mirror arrangement (2; 102) for motor vehicles, in particular utility vehicles, having:
a holder (4) mounted on the vehicle;
a housing (6) fixed to the holder (4), preferably latchably articulatedly connected to the holder (4); and
a holding member (8) for a vehicle exterior mirror displaceably accommodated in the housing (6),
**characterized in that**
the housing (6) has a first housing portion (10) which is formed as one piece from plastic and alone guides the holding member (8);
a fixing portion (72) of the first housing portion (10) mounted on the vehicle comprises a metal insert (82) molded into the first housing portion (10) for fixing the holder (4).

2. The exterior mirror arrangement (2; 102) according to claim 1, **characterized in that**
the first housing portion (10) comprises a plain bearing portion (14) in which the preferably tubularly formed holding member (8) is linearly guided directly at the housing portion (10) or on glide strips (16) incorporated in the housing portion (10).

3. The exterior mirror arrangement (2; 102) according to claim 2, **characterized in that**
for the purpose of fixedly clamping the holding member (8) to the plain bearing portion (14), a clamping device (20, 24, 26, 28) is provided, the clamping piece (20) being loadable via a cam (28) of a clamping lever (26) pivotably arranged at the first housing portion (10) against the external wall of the holding member (8), preferably under interposing of a leaf spring arrangement (24).

4. The exterior mirror arrangement (2; 102) according to claim 3, **characterized in that**
the clamping lever (26) is completely accommodated in a recess (30) of the first housing portion (10) when in the clamped state.

5. The exterior mirror arrangement (2; 102) according to one of the preceding claims, **characterized in that**
the first housing portion (10) furthermore comprises a guide section (32, 36) having one or a plurality of guide ribs (36) which engage in corresponding grooves (38; 138) of a slider (40; 140) arranged at the holding member (8), preferably at its end section (34), and fixedly connected to it, wherein the grooves (38; 138) and the guide ribs (36) extend in the adjustment direction of the holding member (8).

6. The exterior mirror arrangement (2; 102) according to one of the preceding claims, **characterized in that**
the housing (6) comprises a second housing portion (12), in particular integrally formed from plastic, via which the first housing portion (10) can be connected to the holder (4) mounted to the vehicle.

7. The exterior mirror arrangement (2; 102) according to claim 6, **characterized in that**
a fixing portion (80) of the second housing portion (12), mounted on the vehicle, for fastening to the holder (4), comprises a metal plate, preferably a molded metal insert (82).

8. The exterior mirror arrangement (2; 102) according to claim 6 or 7, **characterized in that**
the holder (4) comprises an integrally formed latching tooth geometry (68) which stays in operative connection with a latching element (70) arranged between the fixing portion (72) of the first or second housing portion (10, 12) and the holder (4).

9. The exterior mirror arrangement (2; 102) according to one of the claims 6 to 8, **characterized in that**
the holder (4) comprises a receiving portion (76) for a plain bearing bush (78) configured at the fixing portion (80) of the first or second housing portion (10, 12).

10. The exterior mirror arrangement (2) according to one of the preceding claims, **characterized in that**
the holding member (8) is adjustable via an electric actuating unit (58), in particular via a spindle (56) driven by an electric actuating unit (58), wherein the spindle (56) engages with a trapezoidal thread formed in the slider (40), or via cables coupled with the slider (40) or via a rack drive.

11. The exterior mirror arrangement (2) according to claim 10, **characterized in that**
the electric actuating unit (58) is arranged in the first housing portion (10) and a vehicle-side external periphery section of the electric actuating unit (58), preferably an external periphery section of a transmission cover (64), is complementarily configured to a circumferential inner wall of the first housing portion (10).

12. The exterior mirror arrangement (2) according to claim 10 or 11, **characterized in that**
the electric actuating unit (58) can adjust the holding member (8) even when the holding member (8) is firmly pressed to the plain bearing portion (14) via the clamping device (20, 24, 26, 28).

13. The exterior mirror arrangement (2) according to one of the claims 10 to 12, **characterized in that**
a clutch device (90) is connected between the electric actuating unit (58) and the spindle (56), wherein the electric actuating unit (58) permits a transmission of a torque (M_{R}) necessary for the adjustment of the holding member (8) from the electric actuating unit (58) to the spindle (56) in both directions and, in the event of an overload torque greater than a predetermined threshold torque (M_{K}), automatically permits a relative rotation between the electric actuating unit (58) and the spindle (56), wherein the clutch device (90), in the event of a torque direction reversal, does not transmit a load torque (M_{R}) necessary for the adjustment of the holding member (8) over a predetermined free-travel angle (ϕ).

14. The exterior mirror arrangement (2) according to claim 13, **characterized in that**
the clutch device (90) comprises a clutch bell (91) driven by the electric actuating unit (58) and a carrier (92) rotationally fixedly connected to the spindle (56), wherein the carrier (92) comprises rolling elements (97) or sliding elements distributed evenly over the periphery and radial outwardly spring-loaded and pressed against an inner wall (94) of the clutch bell (91); and
the inner wall (94) of the clutch bell (91) comprises evenly distributed raised portions (95) over its periphery, wherein the raised portions (95) push the rolling elements (97) or sliding elements radially inwards in the event of an overload torque greater than the predetermined threshold torque (M_{K}).

15. The exterior mirror arrangement (2) according to claim 14, **characterized in that**
the number of the raised portions (95) is higher than the number of rolling elements (97) or sliding elements.

## Revendications

1. Agencement de rétroviseur extérieur (2; 102) pour véhicules automobiles, notamment des véhicules utilitaires, comprenant :
un support (4) côté véhicule ;
un boitier (6) fixé au dit support, de préférence en y étant articulé par encliquetage ; et
un étrier de support (8) logé de manière coulissante dans le boitier (6) et destiné à un rétroviseur extérieur de véhicule,
**caractérisé en ce que**
le boitier (6) comporte un premier tronçon de boitier (10) en matière plastique, réalisé d'un seul tenant et guidant à lui seul l'étrier de support (8) ; et
un tronçon de fixation (72) côté véhicule, du premier tronçon de boitier (10), pour la fixation au support (4), comporte un insert métallique (82) encastré ou noyé par moulage dans le premier tronçon de boitier (10).

2. Agencement de rétroviseur extérieur (2; 102) selon la revendication 1, **caractérisé en ce que**
le premier tronçon de boitier (10) présente un tronçon de palier lisse (14) dans lequel l'étrier de support (8), de préférence tubulaire, est guidé linéairement, directement sur le tronçon de boitier (10) ou des barrettes de guidage (16), qui y sont insérées.

3. Agencement de rétroviseur extérieur (2; 102) selon la revendication 2, **caractérisé en ce que**
pour serrer de manière fixe l'étrier de support (8) dans le tronçon de palier lisse (14), il est prévu un dispositif de serrage (20, 24, 26, 28), notamment une pièce de serrage (20) pouvant être serrée, par l'intermédiaire d'une came (28) d'un levier de serrage (26) agencé de manière pivotante sur le premier tronçon de boitier (10), contre la paroi extérieure de l'étrier de support (8), de préférence avec interposition d'un agencement de ressort à lame (24).

4. Agencement de rétroviseur extérieur (2; 102) selon la revendication 3, **caractérisé en ce que**
le levier de serrage (26) est, dans l'état serré, logé en totalité dans un évidement (30) du premier tronçon de boitier (10).

5. Agencement de rétroviseur extérieur (2; 102) selon l'une des revendications précédentes, **caractérisé en ce que**
le premier tronçon de boitier (10) présente, par ailleurs, un tronçon de guidage (32, 36) avec une ou plusieurs nervures de guidage (36), qui s'engagent en prise dans des rainures (38; 138) correspondantes d'une pièce de glissement (40; 140) agencée sur l'étrier de support (8), de préférence sur son tronçon d'extrémité (34), et reliée de manière fixe à celui-ci, les rainures (38; 138) et les nervures de guidage (36) s'étendant dans la direction de coulissement de l'étrier de support (8).

6. Agencement de rétroviseur extérieur (2; 102) selon l'une des revendications précédentes, **caractérisé en ce que**
le boitier (6) comporte un deuxième tronçon de boitier (12) de préférence réalisé d'un seul tenant en matière plastique, par l'intermédiaire duquel le premier tronçon de boitier (10) peut être relié au support (4) côté véhicule.

7. Agencement de rétroviseur extérieur (2; 102) selon la revendication 6, **caractérisé en ce que**
un tronçon de fixation (80) côté véhicule, du deuxième tronçon de boitier (12), pour la fixation au support (4), comporte une plaque métallique, de préférence un insert métallique (82) encastré ou noyé par moulage.

8. Agencement de rétroviseur extérieur (2; 102) selon la revendication 6 ou la revendication 7, **caractérisé en ce que**
le support (4) présente une géométrie à dents d'encliquetage (68) qui y est formée, et qui est en liaison d'interaction avec un élément d'encliquetage (70) agencé entre le tronçon de fixation (72) du premier ou deuxième tronçon de boitier (10, 12) et le support (4).

9. Agencement de rétroviseur extérieur (2; 102) selon l'une des revendications 6 à 8, **caractérisé en ce que** le support (4) présente un logement d'accueil (76) pour un coussinet de palier lisse (78) formé sur le tronçon de fixation (80) du premier ou deuxième tronçon de boitier (10, 12).

10. Agencement de rétroviseur extérieur (2) selon l'une des revendications précédentes, **caractérisé en ce que** l'étrier de support (8) peut être réglé par l'intermédiaire d'une unité de réglage électrique (58), notamment par l'intermédiaire d'une broche ou vis (56), qui est entraînée par une unité de réglage électrique (58) et s'engage en prise dans un filetage trapézoïdal formé dans la pièce de glissement (40), ou par l'intermédiaire de commandes à câbles couplées à la pièce de glissement (40) ou par l'intermédiaire d'une transmission à crémaillère.

11. Agencement de rétroviseur extérieur (2) selon la revendication 10, **caractérisé en ce que**
l'unité de réglage électrique (58) est agencée dans le premier tronçon de boitier (10), et un tronçon de périphérie extérieure, côté véhicule, de l'unité de réglage électrique (58), de préférence un tronçon de périphérie extérieure d'un couvercle de transmission (64), est réalisé de manière complémentaire à une paroi intérieure périphérique du premier tronçon de boitier (10).

12. Agencement de rétroviseur extérieur (2) selon la revendication 10 ou la revendication 11, **caractérisé en ce que**
l'unité de réglage électrique (58) peut déplacer l'étrier de support (8) même lorsque l'étrier de support (8) est serré de manière fixe dans le tronçon de palier lisse (14) par l'intermédiaire du dispositif de serrage (20, 24, 26, 28).

13. Agencement de rétroviseur extérieur (2) selon l'une des revendications 10 à 12, **caractérisé en ce que** entre l'unité de réglage électrique (58) et la broche ou vis (56) est placé un dispositif d'accouplement (90), qui permet la transmission d'un couple (M_{R}) nécessaire au déplacement de réglage de l'étrier de support (8), de l'unité de réglage électrique (58) vers la broche ou vis (56), dans les deux sens, et qui, dans le cas d'un couple de surcharge supérieur à un couple limite prédéterminé (M_{K}), permet automatiquement une rotation relative entre l'unité de réglage électrique (58) et la broche ou vis (56), le dispositif d'accouplement (90), lors d'un changement de sens du couple, ne transmettant pas de couple (M_{R}) nécessaire au déplacement de réglage de l'étrier de support (8), sur une plage angulaire (ϕ) prédéterminée de marche libre.

14. Agencement de rétroviseur extérieur (2) selon la revendication 13, **caractérisé en ce que**
le dispositif d'accouplement (90) comprend une cloche d'accouplement (91) entraînée par l'unité de réglage électrique (58) et un entraîneur (92) lié de manière fixe en rotation à la broche ou vis (56), l'entraîneur (92) comportant des corps roulants (97) ou des corps de glissement, qui sont répartis de manière uniforme sur la périphérie, sont chargés radialement vers l'extérieur par ressort, et sont pressés contre la paroi intérieure (94) de la cloche d'accouplement (91) ; et
la paroi intérieure (94) de la cloche d'accouplement (91) présente des protubérances (95) réparties de manière uniforme sur la périphérie, qui, dans le cas d'un couple de surcharge supérieur au couple limite prédéterminé (M_{K}), repoussent les corps roulants (97) ou les corps de glissement radialement vers l'intérieur.

15. Agencement de rétroviseur extérieur (2) selon la revendication 14, **caractérisé en ce que**
le nombre des protubérances (95) est supérieur à celui des corps roulants (97) ou des corps de glissement.
